# EUROPÄISCHE PATENTSCHRIFT

(11) **EP 1 115 228 B1**
(45) Veröffentlichungstag und Bekanntmachung des Hinweises auf die Patenterteilung: **14.04.2010**
(21) Anmeldenummer: 00126717.8
(22) Anmeldetag: 05.12.2000
(51) Int. Cl.: H04L 12/28, H04L 12/46

(54) **Netzwerk-Kopplungseinrichtung**
Network coupling device
Dispositif de couplage pour un réseau de données

(30) Priorität: 05.01.2000 DE 10000237
(43) Veröffentlichungstag der Anmeldung: 11.07.2001
(73) Patentinhaber: SIEMENS AKTIENGESELLSCHAFT, 80333 München (DE)
(72) Erfinder: Krug, Wilfried, Dr., 58452 Witten (DE); Winkelmann, Michael, 44807 Bochum (DE)
(74) Vertreter: Fritzsche, Thomas

(56) Entgegenhaltungen:
- WO-A-98/47267
- PAX R: "REPEATER BETWEEN HOME SYSTEMS COAXIAL CABLE AND TWISTED PAIR MEDIA" IEEE TRANSACTIONS ON CONSUMER ELECTRONICS,US,IEEE INC. NEW YORK, Bd. 41, Nr. 3, 1. August 1995 (1995-08-01), Seiten 890-892, XP000539551 ISSN: 0098-3063

## Beschreibung

Die Erfindung betrifft eine Netzwerk-Kopplungseinrichtung für ein sog. Home-Network, d.h. für ein Datennetz, das eine eigentlich für andere Zwecke vorgesehene Verkabelung, wie z.B. eine bestehende Telefonverkabelung oder eine Verkabelung zur Stromversorgung, als Übertragungsmedium nutzt. Die Erfindung betrifft weiterhin ein Home-Network mit dieser Netzwerk-Kopplungseinrichtung.

Zur Vernetzung mehrerer Datenverarbeitungseinrichtungen insbesondere im Heimbereich, wird gegenwärtig eine als Home-Networking bezeichnete Technik propagiert, bei der die Datenverarbeitungseinrichtungen über eine üblicherweise bereits bestehende, eigentlich für andere Zwecke vorgesehene Verkabelung gekoppelt werden. Aufgrund der Nutzung einer bereits bestehenden Verkabelung, wie z.B. einer hauseigenen Telefonund/oder Stromversorgungsverkabelung, ist zur Vernetzung von Datenverarbeitungsanlagen innerhalb des Bereichs der bestehenden Verkabelung kein zusätzliches Verlegen von Verbindungskabeln erforderlich.

Zur Datenübertragung zwischen den auf diese Weise vernetzten Datenverarbeitungseinrichtungen werden zu übertragende Datenpakete in Signale außerhalb eines im Rahmen der eigentlichen Zweckbestimmung der Verkabelung genutzten Frequenzbereichs kodiert und in die Verkabelung eingespeist. Beim Home-Networking über eine bestehende Telefonverkabelung wird beispielsweise ein vom Telefoniedienst nicht genutzter Frequenzbereich von 5,5 MHz bis 9,5 MHz zur Übertragung von Datenpaketen genutzt, so dass gleichzeitig über die Telefonverkabelung geführte Telefongespräche davon nicht beeinträchtigt werden.

Sofern eine direkte Verbindung der Telefonverkabelung eines Gebäudes z.B. zu einem Internetdienstanbieter besteht, und diese Verbindung eine vorgegebene Länge nicht überschreitet, kann ein Home-Network an andere Kommunikationsnetze, wie z.B. das Internet ohne Zwischenschaltung zusätzlicher Geräte seitens eines Benutzers angebunden werden. Aufgrund einer verhältnismäßig geringen Reichweite eines Home-Network ist diese Möglichkeit jedoch häufig nicht gegeben; insbesondere wenn die Telefonverkabelung eines auf diese Weise vernetzten Gebäudes über eine handelsübliche vermittlungseinrichtung, wie z.B. eine Nebenstellenanlage, an das öffentliche Netz angeschlossen ist. Die zusätzlich in die Telefonverkabelung im Rahmen des Home-Networking eingespeisten Signale werden von einer handelsüblichen Vermittlungseinrichtung in der Regel nicht in das öffentliche Netz übertragen.

Eine allgemeiner anwendbare Methode ein Home-Network an ein übergeordnetes Kommunikationsnetz anzukoppeln, besteht darin, ein spezifisches Modem zwischen hauseigener Telefonverkabelung und öffentlichem Netz anzuschließen, das eine umsetzung zwischen einem Home-Network-Protokoll und einem ISDN-Protokoll durchführt. Eine Anbindung über ein spezifisches Modem ist jedoch insbesondere hinsichtlich komplexerer Netzwerkstrukturen nur wenig flexibel.

Alternativ dazu kann zur Anbindung eines Home-Network auch ein Gatewayrechner mit einer ISDN-Steckkarte und einer Home-Network-Steckkarte nebst zugehöriger Routing-Software engesetzt werden. Dies erfordert jedoch einen sehr hohen Hardware- und Protokollaufwand.

Einen gattungsgemäßen Stand der Techik zeigt das Dokument PAX R: "Repeater between home systems coaxial cable and twiste pair media" IEEE transactions on consumer electronics, US, IEEE INC. NEW YORK, Bd. 41, Nr 3, 4 August 1995 hierin ist ein Repeater zur Verbindung unterschiedlicher Übertragungsmedien offenbart.

Es ist Aufgabe der vorliegenden Erfindung eine Netzwerk-Kopplungseinrichtung für ein Home-Network anzugeben, die eine flexible Anbindung eines Home-Network an weitere Datennetze mit geringem Aufwand erlaubt. Weiterhin ist ein flexibel und mit geringem Aufwand an weitere Datennetze anschließbare Home-Network anzugeben.

Gelöst wird diese Aufgabe durch eine Netzwerk-Kopplungseinrichtung mit den Merkmalen des Patentanspruchs 1.

Zur Anbindung eines Home-Network an ein oder mehrere weitere Datennetze ist das Home-Network mittels einer erfindungsgemäßen Netzwerk-Kopplungseinzichtung an ein Lokales Netz zu koppeln. Ein Lokales Netz wird häufig auch als LAN (Local Area Network) bezeichnet und kann beispielsweise als sog. Ethernet, Token-Ring-, Token-Bus- oder FDDI-Netzwerk oder als eine Kombination hiervon realisiert sein. Die Anbindung des Home-Network an ein Lokales Netz erlaubt es, dessen bestehende Infrastruktur ohne prinzipielle Einschränkungen zu nutzen. Da vielerorts bereits leistungsstarke Lokale Netze mit gut ausgebauter Infrastruktur installiert sind, kann mittels einer erfindungsgemäßen Netzwerk-Kopplungseinrichtung in vielen Fällen das Anwendungsspektrum eines Home-Network mit geringem Aufwand beträchtlich erweitert werden. Viele Lokale Netze sind zudem bereits an übergeordnete Datennetze, wie z.B. ein WAN (Wide Area Network), MAN (Metropolitan Area Network) und/oder das Internet über bestehende Router- oder Gatewayeinrichtungen angekoppelt. Durch die Ankopplung des Home-Network an ein solcherart angebundenes Lokales Netz sind diese übergeordneten Datennetze auch für das Home-Network zugänglich. Durch die erfindungsgemäße Netzwerk-Kopplungseinrichtung können ein Home-Network und ein Lokales Netz direkt verbunden werden. Eine aufwendige Zwischenschaltung eines Rechners mit Ethernet-Karte, Home-Networking-Karte und entsprechender Routersoftware ist nicht erforderlich.

Durch die gattungsgemäße Netzwerk-Kopplungseinrichtung werden das Home-Network und ein Lokales Netz auf der Sicherungsschicht, d.h. auf Protokollschicht 2, des OSI-Referenzmodells und damit transparent bezüglich aller höheren Protokollschichten des ÖSI-Referenzmodells gekoppelt. Die Transparenz der Kopplung bezüglich der höheren Protokollachichten ist insbesondere im Hinblick auf die zunehmende Vielfalt von Netzwerkclatendiensten sehr vorteilhaft, da bei dieser Kopplung keine dienstspezifisehe Protokollumsetzung erforderlich ist. Das Home-Network hat damit ohne zusätzliche Aufwand vollen Zugriff auf die Infrastruktur eines Lokalen Netzes und damit auf die vom Lokalen Netz aus zugänglichen weiteren Datennetze.

Die gattungsgemäße Netzwerk-Kopplungseinrichtung läßt sich mit besonders geringem Hardware- und Protokollaufwand realisieren, da in der Sicherungsschicht keine Auswertung einer die Sicherungsschicht betreffenden Adressinformation erfolgt. Insbesondere hat die erfindungsgemäße Netzwerk-Kopplunqseinrichtung keine Filterfunktion wie eine üblich, zur Kopplung von Datennetzen verwendete Brücke. Im Rahmen einer solchen Filterfunktion wird bei jedem empfangenen Datenpaket anhand von dessen Schicht-2-Adresse festgestellt, in welchem Datennetz sich das Obertragungsziel des Datenpakets befindet. Eine Brücke mit Filterfunktion transportiert ein Datenpaket nur, falls sich das Übertragungsziel nicht im Datennetz des Absenders des Datenpaketes befindet. Zur Realisierung einer solchen Filterfunktion muß von einer Brücke allerdings für jedes angeschlossene Datennetz eine ständig zu aktualisierende Adreßtabelle verwaltet werden, in der die Schicht-2-Adressen empfangener Datenpakete gespeichert werden. Dieser Aufwand ist bei der erfindungsgemäßen Netzwerk-Kopplungseinzichtung nicht erforderlich.

Es ist ein Zwischenspeicher vorgesehen, um aus dem Home-Network bzw. dem Lokalen Netz extrahierte Datenpakete bis zu deren Einspeisung in das jeweilige andere Datennetz zwischenzuspeiethern. Ein solcher Zwischenspeicher kann insbesondere zur Anpassung unterschiedlicher Datenübertragungsraten in Home-Network und Lokalem Netz dienen. So können extrahierte Datenpakete bis zu deren vollständigem Empfang zwischengespeichert werden, um anschließend, z.B. auf Abruf, in das jeweilige andere Datennetz mit dessen Übertragungsrate eingespeist zu werden. Als Zwischenspeicher wird ein nach dem Durchlaufprinzip wirkender, sog. First-in-first-out-Speicher verwendet werden. Vorzugsweise kann der Zwischenspeicher als sog. Dual-Port-RAM realisiert sein.

Zur Erhöhung des Datendurchsatzes kann weiterhin sowohl für die Übertragunsriehtung vom Home-Network zum Lokalen Netz als auch für die entgegengesetzte Richtung jeweils ein eigener Zwischenspeicher vorgesehen sein.

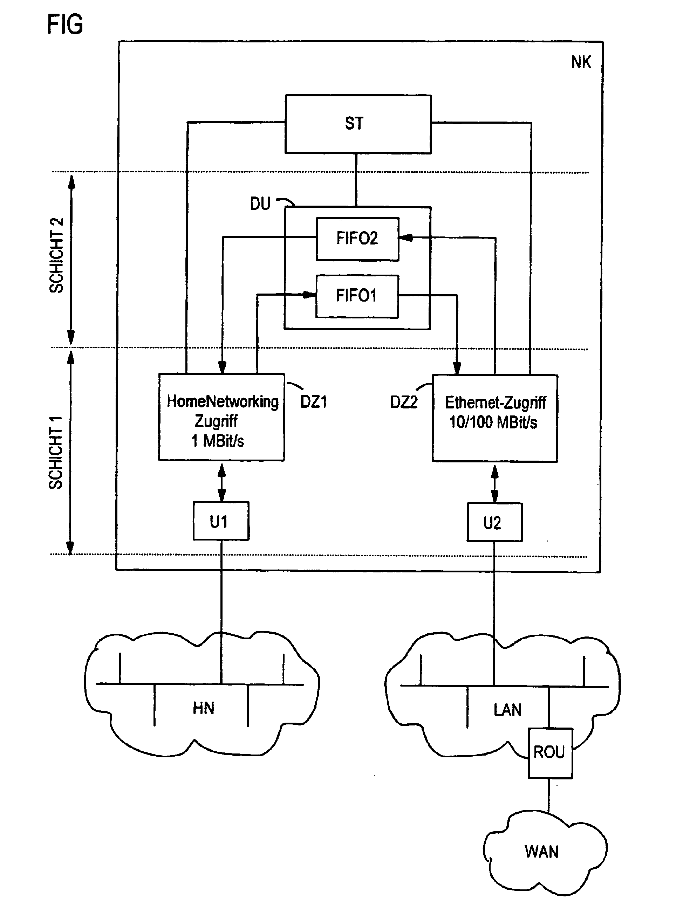

Ein Ausführungsbeispiel der Erfindung wird nachfolgend anhand der Zeichnung näher erläutert.

Die FIG zeigt ein Blockschaltbild einer ein Home-Network und ein Lokales Netz koppelnden Netzwerk-Kopplungseinrichtung.

In der FIG ist eine Netzwerk-Kopplungseinrichtung NK schematisch dargestellt, die an ein Home-Network HN und ein Lokales Netz LAN angekoppelt ist. Im vorliegenden Ausführungsbeispiel ist das Home-Netwrork als sog. Phoneline-Metwork realisiert, d.h. als Datennetz, das eine bestehende Telefonverkabelung als Übertragungsmedium nutzt. Zur Datenübertragung über ein solches Phoneline-Metwork wird ein von Telefonanlagen in der Regel nicht genutzter Frequenzbereich von 5,5 MHz bis 9,5 MHz verwendet. Hierbei läßt sich eine Datenübertragungsrate von 1 MBit/s erzielen. Das Lokale Netz LAN ist im vorliegenden Ausführungsbeispiel als sog. Ethernet ausgebildet, das üblicherweise eine Datenübertragungsrate von 10 MBit/s oder 100 MBit/s bereitstellt. Das Lokale Netz LAN ist über eine Routereinrichtung ROU an ein Weitverkehrsnetz WAN angekoppelt.

Die Netzwerk-Kopplungseinrichtung NK weist als auf der Bitübertragungsschicht, d.h. Schicht 1, des OSI-Referenzmodells wirkende Funktionskomponenten einen Datenzugriffsbaustein DZ1 zum physikalischen Zugriff auf das Home-Network HN und einen Datenzugriffsbaustein DZ2 zum physikalischen Zugriff auf das Lokale Netz LAN auf. Der Datenzugriffsbaustein DZ1 ist dabei über einen Übertrager U1 an das Home-Network HN und der Datenzugriffsbaustein DZ2 über einen Übertrager U2 an das Lokale Netz LAN angeschlossen. Weiterhin enthält die Netzwerk-Kopplungseinrichtung NK als auf der Sicherungsschicht, d.h. auf Schicht 2, des OSI-Referenzmodells wirkende Funktionskomponente eine Datenübertragungseinrichtung DU mit Zwischenspeichern FIFO1 und FIFO2. Die Zuordnung der genannten Funktionskomponenten zu Protokollschichten wird in der Figur mittels punktierter Grenzlinien verdeutlicht.

Die Zwischenspeicher FIFO1 und FIFO2 sind als nach dem Durchlaufprinzip wirkende sog. First-in-first-out-Speicher realisiert und sind jeweils sowohl mit dem Datenzugriffsbaustein DZ1 als auch mit dem Datenzugriffsbaustein DZ2 verbunden. Der Zwischenspeicher FIFO1 dient dabei zum Zwischenspeichern von vom Datenzugriffsbaustein DZ1 zum Datenzugriffsbaustein DZ2 zu übertragenden Daten, während der Zwischenspeicher FIFO2 zum Zwischenspeichern von in entgegengesetzter Richtung zu übertragenden Daten dient. Die Netzwerk-Kopplungseinrichtung NK verfügt darüber hinaus über einen Steuerbaustein ST, der mit den Datenzugriffsbausteinen DZ1 und DZ2 sowie mit der Datenzugriffseinrichtung DU zu Steuerungszwecken verbunden ist. Der Steuerbaustein ST kann beispielsweise als Mikrocontroller mit einem EEPROM zur Speicherung einer zugehörigen Firmware oder als digitaler Signalprozessor ausgeführt sein.

Die Übertrager U1 und U2 dienen im wesentlichen zum Aus- und Einkoppeln von zum Datentransport verwendeten Trägersignalen in das bzw. aus dem jeweiligen physikalischen Übertragungsmedium und zur dazu erforderlichen Pegelanpassung. Im Falle des Home-Network HN werden die zu übertragenden Nutzdaten einem Trägersignal zwischen 5,5 MHz und 9,5 MHz aufmoduliert, das vom Übertrager U1 ausgekoppelt bzw. eingespeist wird. Durch die Datenzugriffsbausteine DZ1 und DZ2 wird eine Umsetzung zwischen den von den Übertragern U1 bzw. U2 ausgekoppelten bzw. einzuspeisenden Trägersignalen und einer Datenpaketschnittstelle zur Sicherungsschicht durchgeführt. Die Datenzugriffsbausteine DZ1 und DZ2 haben dabei insbesondere die Aufgabe, Präambeln von Schicht-1-Datenpaketen zu detektieren bzw. zu generieren und Kollisionen von Schicht-1-Datenpaketen auf dem Übertragungsmedium zu erkennen. Durch die Datenzugriffsbausteine DZ1 und DZ2 werden die in Home-Network HN und Lokalem Netz LAN unterschiedlichen Modulationsarten und Rahmenstrukturen der Schicht-1-Datenpakete aneinander angepaßt.

Ein im Home-Network HN übertragenes Datenpaket wird somit vom Übertrager U1 zum Datenzugriffsbaustein DZ1 weitergeleitet, der das Datenpaket anhand seiner Präambel als Schicht-1-Datenpaket erkennt und dieses in ein Datenpaket der Sicherungsschicht umsetzt. Der Datenzugriffsbaustein DZ1 signalisiert daraufhin seine Bereitschaft, das erkannte Datenpaket auszulesen an den Steuerbaustein ST. Dieser veranlaßt infolgedessen den Zwischenspeicher FIFO1 das Datenpaket bis zu dessen vollständigem Empfang zwischenzuspeichern. Nach dem vollständigen Empfang des Datenpaketes wird dieses auf Veranlassung des Steuerbausteins ST aus dem Zwischenspeicher FIFO1 zum Datenzugriffsbaustein DZ2 und von dort über den Übertrager U2 in das Lokale Netz LAN mit einer an dessen höhere Übertragungsrate angepaßten Geschwindigkeit übertragen.

Bei der Übertragung von Datenpaketen zwischen den Schicht-1-Datenzugriffsbausteinen DZ1 und DZ2 wird auf der Sicherungsschicht keine Auswertung von die Sicherungsschicht betreffenden Adressen, den sog. MAC-Adressen (MAC: Medium Access Control), durchgeführt. Die Datenpakete werden gewissermaßen nur unter kurzer Zwischenspeicherung kopiert. Der Verzicht auf eine Adressauswertung in der Sicherungsschicht erlaubt eine wesentliche schaltungstechnische Vereinfachung der Netzwerk-Kopplungseinrichtung NK. Ermöglicht wird diese Einsparung durch eine weitgehende Ähnlichkeit der in einem Home-Network HN einerseits und einem Lokalen Netz LAN andererseits verwendeten Übertragungsprotokolle.

Eine Übertragung von Datenpaketen vom Lokalen Netz LAN über die Netzwerk-Kopplungseinrichtung NK zum Home-Network HN erfolgt analog zur oben erläuterten Übertragung in entgegengesetzter Richtung. Das Trägersignal der im Lokalen Netz LAN übertragenen Datenpakete wird dazu vom Übertrager U2 ausgekoppelt und dem Datenzugriffsbaustein DZ2 zugeführt. Dieser setzt die durch das Trägersignal transportierten Datenpakete in Schicht-2-Datenpakete um. Diese werden auf Veranlassung des Steuerbausteins ST im Zwischenspeicher FIFO2 bis zum Abruf durch den Datenzugriffsbaustein DZ2 zwischengespeichert. Der Abruf der Datenpakete wird dabei wiederum durch den Steuerbaustein ST gesteuert. Da die Datenübertragungsrate des Home-Network HN wesentlich geringer als die des Lokalen Netzes LAN ist, werden die Datenpakete wesentlich langsamer aus dem Zwischenspeicher FIFO2 ausgelesen als sie darin eingespeichert werden. Der Zwischenspeicher FIFO2 dient somit insbesondere als Pufferspeicher zur Anpassung der unterschiedlichen Datenübertragungsraten in Home-Network HN und Lokalem Netz LAN.

Durch die unverändernde Übertragung von Datenpaketen auf der Sicherungsschicht werden Home-Network HN und Lokales Netz LAN hinsichtlich aller höheren Protokollschichten, d.h. ab Schicht 3 inklusive, transparent gekoppelt. Aus der Sicht aller höheren Protokollschichten erscheint das Home-Network HN und das Lokale Netz LAN somit als ein gemeinsames Datennetz. Ein wesentlicher Vorteil ist in diesem Zusammenhang, dass die Sicherungsschicht eine einheitliche Schnittstelle zur nächsthöheren Protokollschicht, der Vermittlungsschicht, aufweist. Diese Schnittstelle ist damit protokollunabhängig und medienneutral. Das Home-Network HN kann aufgrund seiner transparenten Kopplung an das Lokale Netz LAN dessen gesamte Infrastruktur und insbesondere dessen Anbindung an das Weitverkehrsnetz WAN auf einfache Weise nutzen. Aufgrund der einfachen Struktur der Netzwerk-Kopplungseinrichtung NK läßt sich diese auch besonders vorteilhaft in einem Chip integrieren.

## Patentansprüche

1. Netzwerk-Kopplungseinrichtung (NK) zum Ankoppeln eines Datennetzes (HN), das eine eigentlich für andere Zwecke vorgesehene Verkabelung als Übertragungsmedium nutzt, an ein Lokales Netz (LAN), wobei die Netzwerk-Kopplungseinrichtung (NK)
- als auf der Bitübertragungsachicht des OSI-Referenzmodells wirkende Funktionskomponenten
-- ein an die Verkabelung zu koppelndes, erstes Datenzugriffsmittel (DZ1) zum Extrahieren und Einspeisen von Datenpaketen aus der verkabelung bzw. in die Verkabelung unter Vermeidung einer Beeinträchtigung der eigentlichen Zweckbestimmung der verkabelung und
-- ein an ein Übertragungsmedium des Lokalen Netzes (LAN) zu koppelndes, zweites Datenzugriffsmittel (DZ2) zum Extrahieren und Einspeisen von Datenpaketen aus dem Lokalen Netz (LAN) bzw, in das Lokale Netz (LAN) aufweist, sowie
- als auf der Sicherungsschicht des OSI-Referenzmodells wirkende Funktionskomponente
-- ein mit dem ersten (OZ1) und dem zweiten Datenzugriffsmittel (DZ2) gekoppeltes Datenübertragungsmittel (DU) zum unverändernden Übertragen extrahierter Datenpakete zwischen den Datenzugriffsmitteln (DZ1, DZ2) ohne Auswertung einer in den Datenpaketen enthaltenen, die Sicherungsschicht betreffenden Adressierungsinformation aufweist, **dadurch gekennzeichnet, daß** das Datenübertragungsmittel (DU) einen Zwischenspeicher (FIFO1, FIFO2) zum Zwischenspeichern extrahierter Datenpakete vor deren Übertragung zu einem der Datenzugriffsmittel (DZ1, DZ2) aufweist, wobei der Zwischenspeicher (FIFO1, FIFO2) als First-in-first-out-Speicher realisiert ist.

2. Netzwerk-Kopplungseinrichtung nach Anspruch 1, **gekennzeichnet durch**
ein erstes Datenzugriffamittel (DZ1) zum Extrahieren und Einspeisen von Datenpaketen aus einer bzw. in eine für eine Telefonanlage vorgesehene verkabelung.

3. Netzwerk-Kopplungseinrichtung nach Anspruch 1, **gekennzeichnet durch**
ein erstes Datenzugriffsmittel (DZ1) zum Extrahieren und Einspeisen von Datenpaketen aus einer bzw. in eine Verkabelung zur Stromversorgung.

4. Netzwerk-Kopplungseinrichtung nach einem der Ansprüche 1 bis 3
**dadurch gekennzeichnet,**
**daß** ein Zwischenspeicher (FIFO1, FIFO2) als Dual-Port-RAM realisiert ist.

5. Netzwerk-Kopplungseinrichtung nach einem der Ansprüche 1 bis 4,
**dadurch gekennzeichnet,**
**daß** das Datenübertragungsmittel (DU) sowohl für die Übertragungsrichtung vom ersten (DZ1) zum zweiten Datenzugriffsmittel (DZ2) als auch für die entgegengesetzte Übertragungsrichtung jeweils einen Zwischenspeicher (FIFO1, FIFO2) zum Zwischenspeichern der in die betreffende Richtung zu übertragenden Datenpakete aufweist.

6. Netzwerk-Kopplungseinrichtung nach einem der vorhergehenden Anspruch,
**dadurch gekennzeichnet,**
**daß** die Funktionskomponenten (DZ1, DZ2, DU) auf einem Chip integriert sind.

## Claims

1. Network coupling device (NK) for coupling a data network (HN), which utilizes cabling actually provided for other purposes as a transmission medium, to a local area network (LAN), wherein the network coupling device (NK) comprises
- as functional components operating on the physical layer of the OSI reference model
-- a first data access means (DZ1) to be coupled to the cabling for extracting data packets out of the cabling and feeding data packets into the cabling whilst avoiding impairment of the actual purpose of the cabling and
-- a second data access means (DZ2) to be coupled to a transmission medium of the local network (LAN) for extracting data packets out of the local network (LAN) and feeding data packets into the local network (LAN), and
- as functional components operating on the data link layer of the OSI reference model
-- a data transmission means (DÜ) coupled to the first (DZ1) and to the second data access means (DZ2) for the unchanged transmission of extracted data packets between the data access means (DZ1, DZ2) without evaluating addressing information concerning the data link layer contained in the data packets, **characterized in that** the data transmission means (DÜ) has a buffer memory (FIFO1, FIFO2) for buffering extracted data packets before they are transmitted to one of the data access means (DE1, DE2), wherein the buffer memory (FIFO1, FIFO2) is realized as a first-in-first-out memory.

2. Network coupling device according to Claim 1, **characterized by** a first data access means (DZ1) for extracting data packets out of cabling provided for a telephone system and for feeding data packets into cabling provided for a telephone system.

3. Network coupling device according to Claim 1, **characterized by** a first data access means (DZ1) for extracting data packets out of cabling for the power supply and for feeding data packets into cabling for the power supply.

4. Network coupling device according to one of Claims 1 to 3, **characterized in that** a buffer memory (FIFO1, FIFO2) is realized as a dual-port-RAM.

5. Network coupling device according to one of Claims 1 to 4, **characterized in that** the data transmission means (DÜ) has a buffer memory (FIFO1, FIFO2) for buffering the data packets to be transmitted into the relevant direction in each case both for the transmission direction from the first (DZ1) to the second data access means (DZ2) and also for the opposite transmission direction.

6. Network coupling device according to one of the preceding claims, **characterized in that** the functional components (DZ1, DZ2, DÜ) are integrated on a chip.

## Revendications

1. Dispositif de raccordement à un réseau (RR) servant à raccorder un réseau de données (RD) à un réseau local (LAN), lequel réseau de données utilise un câblage en fait prévu pour d'autres besoins comme média de transmission, le dispositif de raccordement à un réseau (RR) présentant
- comme composants fonctionnels agissant sur la couche de transmission des bits du modèle de référence OSI
-- un premier moyen d'accès aux données (AD1) à raccorder au câblage servant à extraire des paquets de données du câblage et à les introduire dans le câblage en évitant de nuire à l'utilité finale réelle du câblage et
-- un second moyen d'accès aux données (AD2) à raccorder à un média de transmission du réseau local (LAN) servant à extraire des paquets de données du réseau local (LAN) et à les introduire dans le réseau local (LAN), ainsi que
- comme composants fonctionnels agissant sur la couche de sécurité du modèle de référence OSI
-- un moyen de transmission de données (TD) raccordé au premier moyen d'accès aux données (AD1) et au second moyen d'accès aux données (AD2) servant à transmettre de manière constante des paquets de données extraits entre les moyens d'accès aux données (AD1, AD2) sans analyser une information d'adressage contenue dans les paquets de données et concernant la couche de sécurité,
**caractérisé en ce que** le moyen de transmission de données (TD) présente un dispositif de mémorisation temporaire (FIFO1, FIF02) servant à mémoriser de manière temporaire des paquets de données extraits avant leur transmission à un des moyens d'accès aux données (AD1, AD2),
un dispositif de mémorisation temporaire (FIFO1, FIF02) étant réalisé comme dispositif de mémorisation FIFO (Firt-in-first-out - premier entré, premier sorti).

2. Dispositif de raccordement à un réseau selon la revendication 1,
**caractérisé par**
un premier moyen d'accès aux données (AD1) servant à extraire des paquets de données d'un câblage et à les introduire dans un câblage prévu pour une installation téléphonique.

3. Dispositif de raccordement à un réseau selon la revendication 1,
**caractérisé par**
un premier moyen d'accès aux données (AD1) servant à extraire des paquets de données d'un câblage et à les introduire dans un câblage d'alimentation électrique.

4. Dispositif de raccordement à un réseau selon l'une quelconque des revendications 1 à 3,
**caractérisé**
**en ce qu'**un dispositif de mémorisation temporaire (FIFO1, FIF02) est réalisé comme mémoire vive à double port (Dual-Port-RAM).

5. Dispositif de raccordement à un réseau selon l'une quelconque des revendications 1 à 4,
**caractérisé**
**en ce que** le moyen de transmission de données (TD) présente un dispositif de mémorisation temporaire (FIFO1, FIF02) servant à mémoriser de manière temporaire des paquets de données à transmettre dans la direction concernée aussi bien pour la direction de transmission du premier moyen d'accès aux données (AD1) au second moyen d'accès aux données (AD2) que pour le sens de transmission opposé.

6. Dispositif de raccordement à un réseau selon l'une quelconque des revendications précédentes,
**caractérisé en ce**
**que** les composants fonctionnels (AD1, AD2, TD) sont intégrés sur une puce.
